Europäisches Patentamt

European Patent Office

Office européen des brevets

(19)

(11) Publication number : **0 445 927 A2**

(12) # EUROPEAN PATENT APPLICATION

(21) Application number : **91301142.5**

(22) Date of filing : **13.02.91**

(51) Int. Cl.⁵ : **G01N 30/64**

(30) Priority : **06.03.90 US 489171**

(43) Date of publication of application :
**11.09.91 Bulletin 91/37**

(84) Designated Contracting States :
**AT BE CH DE DK ES FR GB GR IT LI LU NL SE**

(71) Applicant : **GAS RESEARCH INSTITUTE**
**8600 West Bryn Mawr Avenue**
**Chicago Illinois 60631 (US)**

(72) Inventor : **Wallace, John R.**
**3398 Carmel Mountain Road**
**San Diego, California 92121 (US)**
Inventor : **Stetter, Joseph R.**
**1228 Olympus Drive**
**Naperville, Illinois 60540 (US)**
Inventor : **Nacson, Sabatino**
**222 Snidercroft Road**
**Concord, Ontario L4K-1B5 (CA)**
Inventor : **Findlay,Melvin W. Jr.**
**204 Bay Colony**
**Naperville, Illinois 60545 (US)**

(74) Representative : **Spall, Christopher John et al**
**BARKER, BRETTELL & DUNCAN 138 Hagley**
**Road**
**Edgbaston Birmingham B16 9PW (GB)**

(54) **Odorant analyzer system.**

㋝    An odorant analyzer system for measuring the concentration of odorants in natural gas includes a gas chromatograph column (102) for temporally separating natural gas odorant components, an electrochemical detector (104) for oxidizing the odorant components, and a potentiostat (108) for controlling an electrical potential across the detector and providing an electrical output signal proportional to the concentration of gas components.

EP 0 445 927 A2

FIG. 2

# ODORANT ANALYZER SYSTEM

## BACKGROUND OF THE INVENTION

The field of the present invention is analytical chemistry, and more particularly, gas chromatography, and still more particularly, the quantitative and qualitative evaluation of odorants in natural gas.

The characteristic odor of natural gas is a principal means of alerting the consuming public to potentially dangerous gas leaks. This odor is not necessarily indigenous to natural gas but is maintained by the addition of various odiferous compounds such as mercaptans and organic sulfides. The concentration of such odorant compounds in natural gas must be maintained constant so as to provide sufficient warning of significant leaks while avoiding the occurrence of false alarms. In addition, it is necessary to maintain a constant ratio of the individual odorant compounds in order to maintain the characteristic odor that is recognized by the public, since different compounds exhibit somewhat different odors.

The task of odorizing natural gas is further complicated because some natural gases contain variable concentrations of indigenous odorants which must be considered during the odorization process. Another complication is that odorant compounds are often lost during transit through the distribution network, and consequently the amount added at the odorization station may no be the amount present at the point of delivery. Another concern of utilities is the presence of naturally occurring $H_2S$ in natural gas. Although this compound is also odiferous, it is highly corrosive and undesirable. Utilities thus attempt to monitor its concentration to assure that it does not reach deliterious levels. It is thus important that utilities measure $H_2S$ as well as the various odorants in order to assure the safety of natural gas.

Existing legislation for the odorization of natural gas requires that the gas must be detectable at a concentration 20% of the lower limit of combustibility. The legislation though, does not define which odorants are to be present, whether they are natural or added, nor does it define to what extent the general population must be able to detect the odors.

In the past, most companies have either relied upon their distributors to ensure proper level of odorization or they have added stations at which odorants are blended with the gas. Over the past several years, companies have added odor verification programs. Typically these programs consist of an operator smelling or sniffing the gas at various points in the distribution network. In some instances, the operators use a device which blends the gas with air to determine the gas and air concentration at which the odor is first detected.

All of these methods suffer from the subjective nature of the test. Sensitivity to odorants vary substantiallar from the individual to individual and even on a day to day basis for a given individual.

Past attempts to instrumentally quantify odorant levels in natural gas have largely proven to be ineffective. Existing instrumentation for this type of analysis is either non-selective to the variety of odorants which may be present or do not lend themselves to portable operation. Methods for collecting gas samples for transportation to a central laboratory for analysis have also been ineffective due to the instability of the odorant compounds.

It would therefore be desirable to provide a portable natural gas odorant detector which could be readily used in the field to test for natural gas odorants. Such a device should provide increased sensitivity and decreased response time, and should be class selective in order to selectively measure hydrogen sulfides, mercaptans and organic sulfides while remaining insensitive to natural gas hydrocarbon compounds. Further, the device should be rugged and insensitive to motion and position.

Prior art efforts to test odorant levels in natural gas have included conventional flame photometry, photo ionization and colorimetric methods. A French developed apparatus employs an electrochemical cell.

Thus, Coquad, "Odorant Measurement And Control In A Distribution System," proposes an odorant measurement system known as the "Medor," which includes a carrier gas-injection system employing a chromatographic column in combination with a detector formed from a glass or methyl polymethacrylate container having two platinum gauze electrode grids welded 30 millimeters apart in a glass tube and separately connected to an amplifier or to a recorder by a platinum wire. An electrolyte, a 10% solution of chromic oxide in distilled water, is contained in the container into which the tube with the electrode dips. This apparatus appears not to be suited for rugged, portable operation, uses corrosive toxic chemicals, requires bottled gas, and may lack sufficient sensitivity and response time. Brody, et al. (U.S. Patent No. 3,489,498) proposes a conventional gas chromatograph and flame photometric detector arrangement with asserted specificity to sulphur and phosphorous. Smith, et al. (U.S. Patent No. 4,402,910) teaches a gas sampling system for analyzing hydrogen sulfide in a gas stream including a gas chromatograph in conjunction with a conventional $H_2S$ analyzer. Fulweiler (U.S. Patent No. 1,512,893) provides a method and apparatus for quantitative determination of hydrogen sulfide in illuminating and other gas wherein a gas sample is passed over a strip of hardened filter paper spotted with solutions of different salts that are differently reactive to different concentrations of hydrogen sulfide in the gas for the formation of sulfides, of different coloration. Morriss, et al. (U.S. Patent No. 3,061,414) discusses a method and apparatus for analyzing gases containing low molecular weight mercaptans and/or hydrogen sulfide wherein an aqueous iodine solution is contacted with the sample gas, causing a change in the acidity of the aqueous iodine solution, depending on the concentration of the low molecular weight mercaptans and/or hydrogen sulfide. Jones (U.S. Patent No. 3,114,609) proposes a method and apparatus for mercaptan analysis of hydrocarbon streams, wherein reagent and gas streams are directed through metering pumps, scrubber columns, a reactive column (for the reagent stream) and a pair of conductivity cells placed in a bridge circuit to produce conductivity differentials between variously treated portions of the gas stream. Peurifoy, et al. (U.S. Patent Nos. 3,208,828 and 3,475,129) provides a method and device for determining whether an indicator such as an odorant has been added to a gas stream and is present in a required concentration, wherein a sample is routed to a detector tube made of transparent material such as glass, and which is provided with uniform sections of impregnated silica gel and unimpregnated silica gel or sand of different color whose length is adjusted so that a color change of each section or zone, corresponds to a level of 10ppm mercaptan in a prescribed volume of gas. The impregnating material is palladium chloride. The volume of the gaseous mixture is controlled by a balloon fitted in a conventional volume ring. Kniebes, et al. (U.S. Patent No. 3,686,930) proposes a method and apparatus for measuring odor level in natural gas wherein a gas sample is carried by a nitrogen carrier gas through a chromatographic column to a flame photometric detector. Mitchell (U.S. Patent No. 3,692,481) proposes a method for determining the concentration of organic sulphur compounds in a gas employing a gas chromatograph fitted with a flame ionization detector and a recorder. Pierce (U.S. Patent Nos. 3,718,434 and 3,437,446) provides an apparatus and method for detecting gaseous contaminants such as $SO_2$, $SO_3$ and $H_2S$ in ambient air, stack gases, flue gas streams, automotive exhaust, etc., which monitors the poisoning effect (and contaminant concentration) by measuring changes in the flow rate for a gas diffusing through a selectively permeable metallic element. Cheng, et al. (U.S. Patent No. 3,820,958) proposes an apparatus and method for determining the presence of hydrogen sulfide in a gas mixture such as air, wherein silver is deposited on a thin dielectric film, exposed to the hydrogen sulfide containing gas mixture, and measuring the electrical resistance across the film before and after exposure to hydrogen sulfide. Verma, et al. (U.S. Patent No. 3,960,494) proposes a method and apparatus for measuring the presence of mercaptan-based odorants in natural, synthetic, or liquid petroleum gases and the like, wherein a gas to be tested is injected into multiple compartments, each containing a different reagent. The reagents are mixed together and the resultant color is checked against a standard color slide or the like to identify the amount of mercaptan-based odorants in parts per million present in the sample of gas. Vincent, et al. (U.S. Patent No. 4,526,755) proposes a gas analyzer for natural gas to determine the existence of and concentration of wanted and unwanted sulfur compounds and odorizing agents by providing scrubbers of different kinds delivering gases in different combinations to electrical measurement apparatus from which corresponding signals are subtracted. Eads (U.S. Patent No. 3,650,696) proposes a method for sampling ambient air containing sulfur compounds and separating, identifying and quantitatively monitoring each compound wherein a gaseous sample is collected in substantially sulfur-free methanol and passed through a gas chromatograph column to separate the sulfur compounds. From the gas chromatograph the separated sulfur compounds go through a pyrolysis furnace where they are oxidized to sulfur dioxide, and then into a microcoulometer for titration.

Accordingly, it is an object of the present invention to provide a natural gas odorant analyzer that achieves a qualitative identification and quantitative determination of hydrogen sulfides, mercaptans and organic sulfides in natural gas.

It is a further object of the present invention to provide a natural gas odorant analyzer that is not sensitive to interferences from naturally occurring components in natural gas such as various hydrocarbons.

It is a further object of the present invention to provide a natural gas odorant analyzer that is portable, self-contained and relatively insensitive to motion and position.

It is a further object of the present invention to provide a natural gas odorant analyzer that does not rely on compressed gas cylinders to provide a supply of a carrier gas.

It is a further object of the present invention to provide a natural gas odorant analyzer capable of detecting an odorant compound at concentrations of nominally 0.1 ppm by volume.

It is a further object to provide a natural gas odorant analyzer that does not rely on caustic or hazardous reagents.

It is a further object of the present invention to provide a natural gas odorant analyzer with fast response time.

EP 0 445 927 A2

SUMMARY OF THE INVENTION

The present invention is directed to a portable natural gas odorant analyzer system including a chromatograph column for temporally separating components, an electrochemical detector for oxidizing odorant components, and a potentiostat for controlling an electrical potential across the detector electrodes and providing an electrical output signal proportional to the concentration of gas components.

It will be evident that the above-stated objectives are achieved, together with other attendant advantages, when the following detailed description is read in conjunction with the below-described drawings.

BRIEF DESCRIPTION OF THE DRAWINGS

Fig. 1 is an exterior plan view of a portable natural gas odorant analyzer constructed in accordance with the present invention.

Fig. 2 is a diagrammatic illustration of the odorant analyzer of fig. 1.

Fig. 3 is a representative chromatogram with odorants in actual natural gas obtained with the odorant analyzer of fig. 1 with peaks corresponding to hydrogen sulfide ($H_2S$), methyl mercapton (MM), dimethyl sulfide (DMS), and t-butyl mercapton (TBM).

Fig. 4 is a diagrammatic illustration of a gas delivery system of the odorant analyzer of fig. 1.

Fig. 5 is a detailed sectional illustration of a gas detector employed in the odorant analyzer of fig. 1.

Fig. 6A is a chromatogram of the natural gas odorants isopropyl mercapton (IPM) and normal mercapton (NPM) at concentrations of 0.09 and 0.08, repsectively.

Fig. 6B is another chromatogram of the natural gas odorants t-butyl mercapton (TBM) and methyl ethyl sulfide (MES) at concentrations of 0.14 and 0.16 PPMV, respectively.

Fig. 7 is a chromatogram of odorized natural gas resulting from injections at ten minute intervals.

Fig. 8 illustrates typical calibration curves for use with the odorant analyzer of fig. 1.

Fig. 9 is a chromatogram illustrating class selectivity in an odorant analyzer constructed in accordance with the present invention.

Fig. 10 is a chromatogram illustrating rapid response achieved in an odorant analyzer constructed in accordance with the present invention.

Fig. 11 is a chromatogram illustrating insensitivity to movement in an odorant analyzer constructed in accordance with the present invention.

Fig. 12 is an alternative embodiment gas detector constructed in accordance with the present invention.

Fig. 13 is a plan view of an alternative embodiment electrode assembly constructed in accordance with the present invention.

Fig. 14 is a side view of the electrode assembly of Fig 13.

DETAILED DESCRIPTION OF PREFERRED EMBODIMENTS

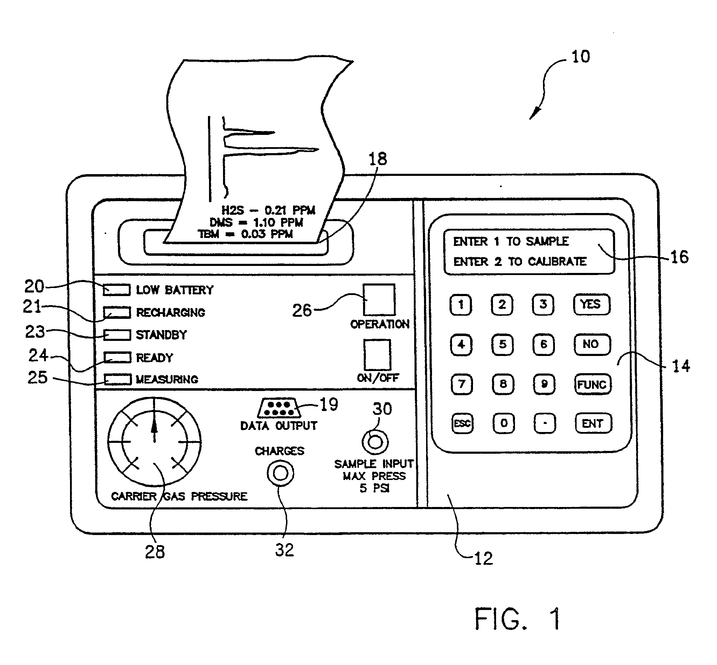

Having reference to fig. 1 the invention may be embodied in structural form in a housing 10 having an instrument panel 12 providing an operator-machine interface. Disposed on the instrument panel 12 is a keypad 14 for data entry and a display output 16 for operator messages. Data is outputted via an onboard ink cartridge printer 18, and optionally through a serial data port 19. Status lights 20-26 provide a visual indication of various conditions of the analyzer. A carrier gas pressure indicator 28 indicates carrier gas line pressure. A sample gas inlet 30 provides a natural gas input to the analyzer. The analyzer's 12 v rechargeable battery (not shown) may be charged through a charge connector 32. The battery may be of conventional design and preferably provides at least eight hours continuous operation between chargings.

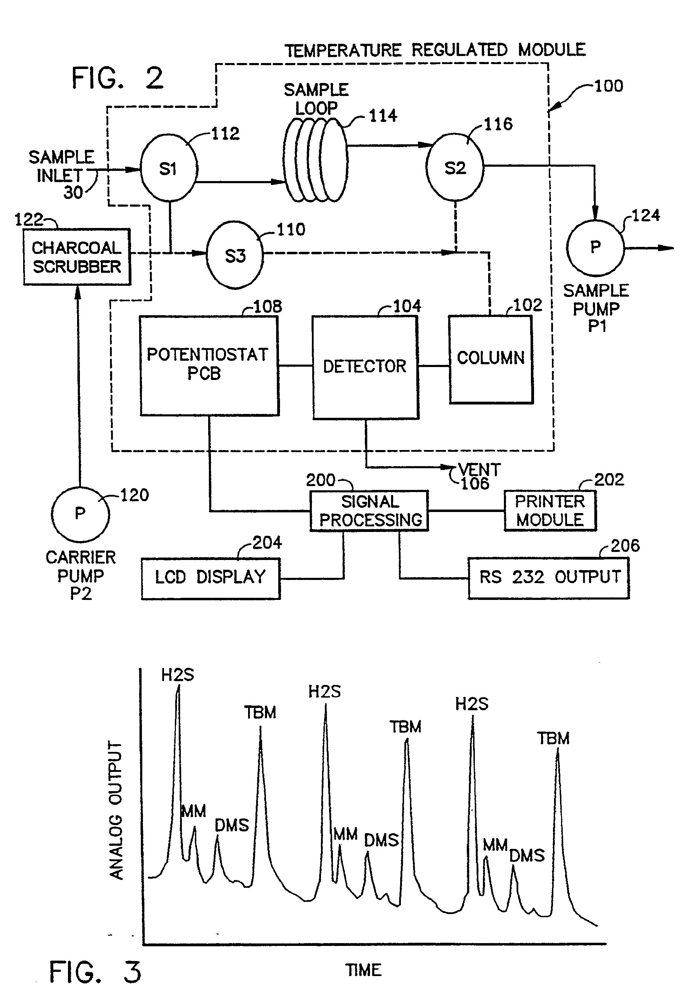

Having reference now to fig. 2, there is disposed within the housing 10 a temperature regulated module 100 which provides a temperature controlled environment for analyzer components. These components include a gas chromatograph column 102 in fluid communication with an electrochemical (ECC) detector 104, which vents from the analyzer to a vent 106. The detector 104 provides a situs for oxidizing and reducing natural gas samples depending upon the applied detector bias. The detector bias is controlled by a potentiostat 108 which also generates an electrical output signal representing the concentration of odorants present in the detector 104.

The temperature regulated module 100 also contains components of the gas delivery system used to provide a gas sample to the column and detector. The gas delivery system components within the temperature regulated module 100 include three solenoid valves of conventional design, those being a first gas flow control valve 110, a second gas flow control valve 112, and a third gas flow control valve 116. A sample loop 114 of conventional design is provided between the valves 112 and 116. The sample loop 114 provides a temporary

5

storage area for storing a sample gas charge prior to delivery to the column 102 and detector 104. Completing the gas delivery system is the sample inlet 30 extending from the front face of the housing 10 to the second gas flow control valve 112, a carrier gas pump 120 extending to a charcoal scrubber 122 which extends into the temperature regulated module 100 to the gas flow control valves 110 and 112, and, lastly, a gas sample pump 124 receiving an input from the gas flow control valve 116. The sample pump output is vented to atmosphere.

It will be appreciated that the first gas flow control valve 110 includes an inlet in fluid communication with the scrubber 122, an outlet in fluid communication with the column 102, and solenoid actuated valving for selectively interrupting the flow of carrier gas between the valve inlet and outlet. The second gas flow control valve 112 includes a first inlet in fluid communication with the inlet of the first gas flow control valve 110, a second inlet in fluid communication with the sample inlet 30, an outlet in fluid communication with the sample loop 114 and solenoid actuated valving for selectively interrupting gas flow between one of the first and second valve inlets and the valve outlet. The third gas flow control valve 116 includes a valve inlet in fluid communication with the sample loop 114, a first valve outlet in fluid communication with the outlet of the first gas flow control valve 110, a second valve outlet in fluid communication with the sample pump 124 and solenoid actuated valving for selectively interrupting gas flow between the valve inlet and the first and second valve outlets.

The gas delivery system is configured to operate in a carrier gas delivery mode and in a sample gas injection mode such that a gas sample is first loaded into the gas delivery system and then carried to the column and detector by the carrier gas.

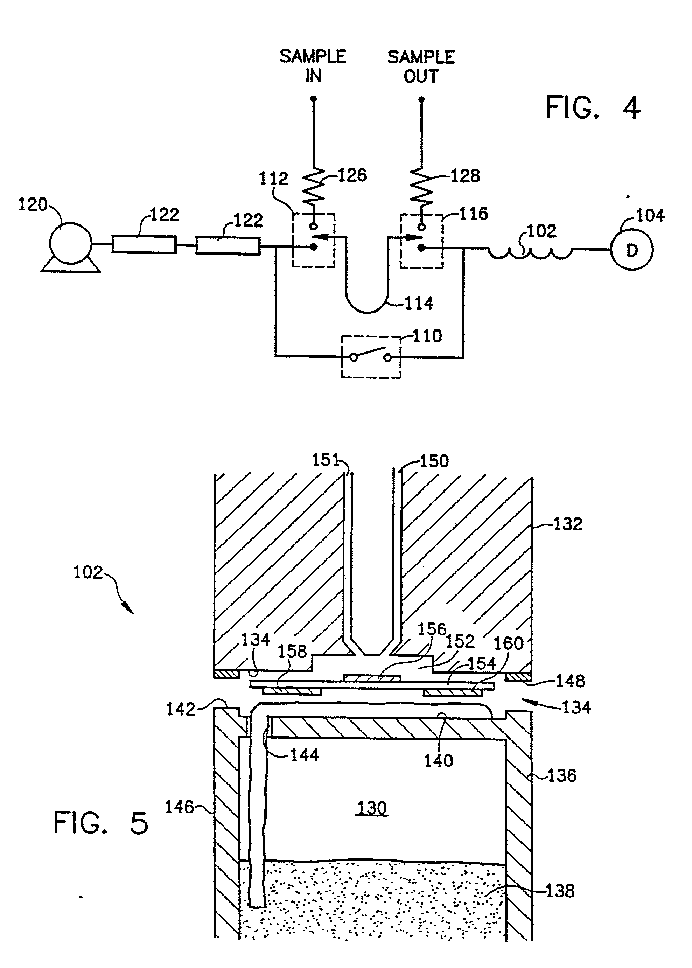

Referring now to figs. 2 and 4, operation of the gas delivery system will now be described. During standby operation, ambient air is compressed by the pump 120 and is dried and cleaned by the scrubbers 122 to form a clean dry carrier gas. This carrier gas proceeds through the solenoid valve 112, the sample loop 114, the solenoid valve 116 and on to the column 102 and the detector 104. In this mode the solenoid valve 110 is closed, the valve 112 is positioned to interrupt gas flow from the sample inlet and the valve 116 is positioned to interrupt gas flow to the sample pump 124. The detector 104 causes the potentiostat 108 to generate a small constant background current.

To load a sample, solenoid valves 112 and 116 are actuated so as to selectively interrupt fluid communication with the solenoid valve 110. At the same time, the solenoid valve 112 selectively opens to the sample inlet 30 while the solenoid valve 116 selectively opens to the gas sample pump 124. Simultaneously, the pump 124 is activated to draw a gas sample through the sample loop 114. The solenoid valve 110 is simultaneously opened to maintain constant flow of carrier gas through the column 102 and detector 104.

Analysis begins when the solenoid valves 112, 116 and 110 are de-energized, such that the valve 110 is closed, the valve 112 is closed to the sample inlet 30 and opened to the valve 110, and the valve 116 is closed to the sample pump 124 and opened to the valve 110. This causes the contents of the sample loop 114 to be injected into the head of the column 102. Each of the odorant compounds proceeds through the chromatographic column 102 at a different velocity and elute separately through the detector 104. Each compound, as it elutes through the detector, causes a current to flow through the detector in proportion to the mass of odorant originally injected. Thus, each odorant compound is qualitatively identified by its retention time through column 102 and is quantitatively determined by measurement of the current generated by the potentiostat 108. The column 102 is maintained at a constant temperature of about 45°C in the temperature regulated module to assure constant retention times.

Flow restrictors 126 and 128, shown in fig. 4, are present to assure constant sample gas injection volume. Without these restrictors, various amounts of sample may escape during the injection process, thereby leading to variations in the detector response.

The column 102 is adapted to obtain maximum temporal separation of odorant compounds in a minimum time period. Moreover, the column is compact, operates at relatively low pressures (preferably about 16 psi, or between about 10 and 20 psi, and no more than 50 psi), is inert to odorant compounds and at the same time is physically robust. Operating temperature is slightly above ambient, outdoor conditions, at 45° C. The column 102 is formed from a mixture of 18.5% SP2100 TM, a low viscosity silicon oil sold by Supelco, Inc., 1.1% FLUORAD 430 TM, sold by 3M Company, 1.3% dodecanethiol and 100/120 mesh chromosorb w HP. The mixture is packed in an FEP TEFLON TM tube of 1/16" OD and 1/32" ID. The tube is formed into a 1 inch coil and formed into a "U" shape about 1 1/2" to 2" long.

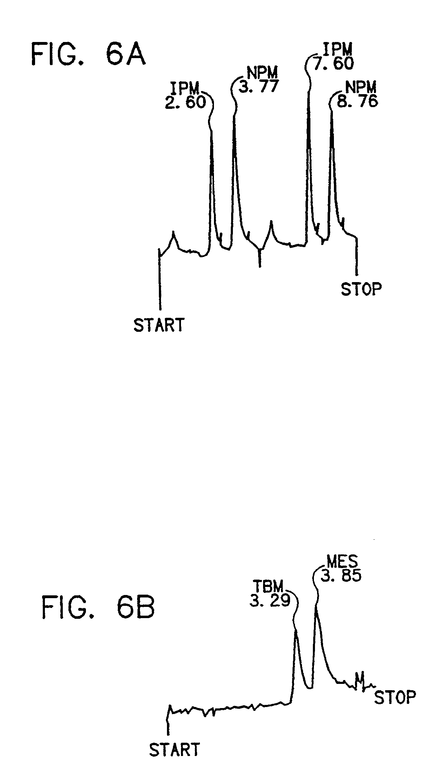

Referring now to fig. 5, the detector 102 may be seen as including a lower fluid containing cell body 130, an upper exposure cap 132 and an electrochemical cell assembly 134. The cell body 130, which may be formed from any suitable non-conductive structurally rigid material, includes a cylindrical wall 136 for containing a fluid, an upper circular chamber defining surface 140 and a cylindrical lip 142 extending upwardly from the chamber-defining surface 140. The chamber-defining surface 140 has an aperture 144 formed therein. A polymeric wick 146, which may be formed from any suitable hydrophilic polymeric material, rests on top of the chamber-defining surface 140 and extends through the aperture 144 into the fluid reservoir 138 in the cell body 130, which is typically filled with distilled water. Disposed adjacent the top of the circumferential lip 142 of the cell body 130 is an elastomeric ring member 148 which seals off the chamber formed between the cell body 130 and the upper exposure cap 132 when these components are joined together. The exposure cap 132, which may also be formed from any suitable non-conductive structurally rigid material, includes a cylindrical body portion having respective gas inlet and outlet passages 150 and 151. The passages 150 and 151 extend through the body of the exposure cap 132 to an interior recess 152 formed in the lower chamber-defining face 154 of the exposure cap 132. The elastomeric ring 148 is disposed between the lower chamber-defining surface 134 of the exposure cap 132 and the circumferential lip 142 formed on the cell body 130. The upper chamber-defining surface 140, together with the lower chamber-defining surface 134, and the interior cavity 152, define a detector cavity of relatively small volume, such as about 1/4" diameter x 1/16" in height, within which is disposed the electrochemical cell 134.

The electrochemcial cell 134 includes a polymeric electrolyte membrane 154 which may be advantageously formed from perflourocarbon, which is commercially available from Dupont Corporation under the tradename NAFION TM. Attached to the NAFION TM membrane 154 are three metallic electrodes, a working electrode 156, a counter electrode 158 and a reference electrode 160. The working electrode 156 may be advantageously formed from gold, while the counter and reference electrode 158 and 160 may be advantageously formed from platinum. Each electrode is connected to the potentiostat 108, which may be of conventional design. The NAFION TM membrane 154 is hydrated by the polymeric wick 146. In operation, substantially no current is drawn from the reference electrode 160, while the electrical bias on the working electrode is maintained by changing the current through the counter electrode 158. The NAFION TM membrane acts as a solid phase ionic conductor and thus serves as the electrolyte for the electrochemical cell.

It will be appreciated that the detector 102 confines the influent gases from the column 102 to a small volume about the working electrode 156. Moreover, because hydration is provided using the polymeric wick 146, the detector is not sensitive to movement and orientation. In operation, the electrical potential of the working electrode is maintained sufficiently oxidizing to assure the oxidation of sulfur compounds while avoiding oxidation of potential interferences or water. In the absence of a sulfur compound, a small but constant background current occurs at the working electrode. However, as odorant compounds enter the exposure chamber, they diffuse to the working electrode where they are rapidly oxidized and produce a current roughly proportional to their concentration in the sample gas. Under constant chromatographic conditions of constant flow rate and consistent injection volume, the current at the working electrode is proportional to the mass and concentration of the injected odorant.

Referring now to fig. 2, there is provided outside the temperature regulating module 100, a signal processing module 200 which is preferably a micro-programmable information processing apparatus. The signal processing unit 200 selectively provides output to a printer module 202 which drives the printer 18, a display module 204 which drives the liquid crystal display 16, and serial data output module 206 connected to the serial data output 19, for outputting information to a separate information processing system. The signal processing unit 200 may be conveniently programmed to control the odorant analyzer in two functional modes. In this respect, it will be understood that the signal processing unit 200 is in electrical communication with not only the potentiostat 108, but the solenoid valves 110, 112 and 116, as well as the carrier pump 120 and the sample pump 124. Thus, the signal processing unit 200 controls all analyzer operations.

A preferred potentiostat bias is +300 mv. At this potential, a concentration profile such as that shown in fig. 3 can be readily obtained. Moreover, referring now to fig. 6, detection of typical odorant compounds such as IPM, NPM, TBM, and MES is readily achieved at typical lower level concentrations of 0.09 ppm for IPM, 0.08 ppm for NPM, 0.14 ppm for TBM and 0.16 ppm for MES. Thus, the analyzer is sensitive enough for all odorant analysis applications. At the same time, the response to natural gas odorants over the response to saturated hydrocarbon components of natural gas is on the order of $10^{-6}$ or less. Similarly, the response of carbonyl sulfide, olefins and carbon disulfide to odorants is on the order of $5 \times 10^{-3}$, $5 \times 10^{-4}$ and less than $5 \times 10^{-3}$, respectively.

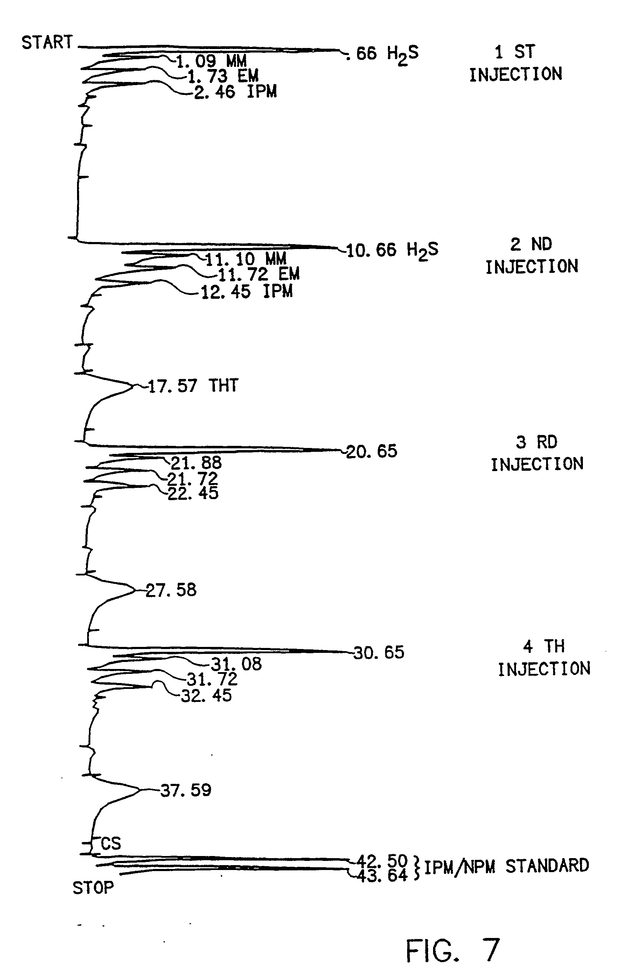

Referring now to fig. 7, the analyzer may be programmed to repeatedly inject a sample, as for example, every 10 minutes. While most odorants may be readily detected within a 5 minute cycle, THT does not elute until 17.57 minutes, after the second injection. Thus, prudent practice may dictate a 10 minute cycle.

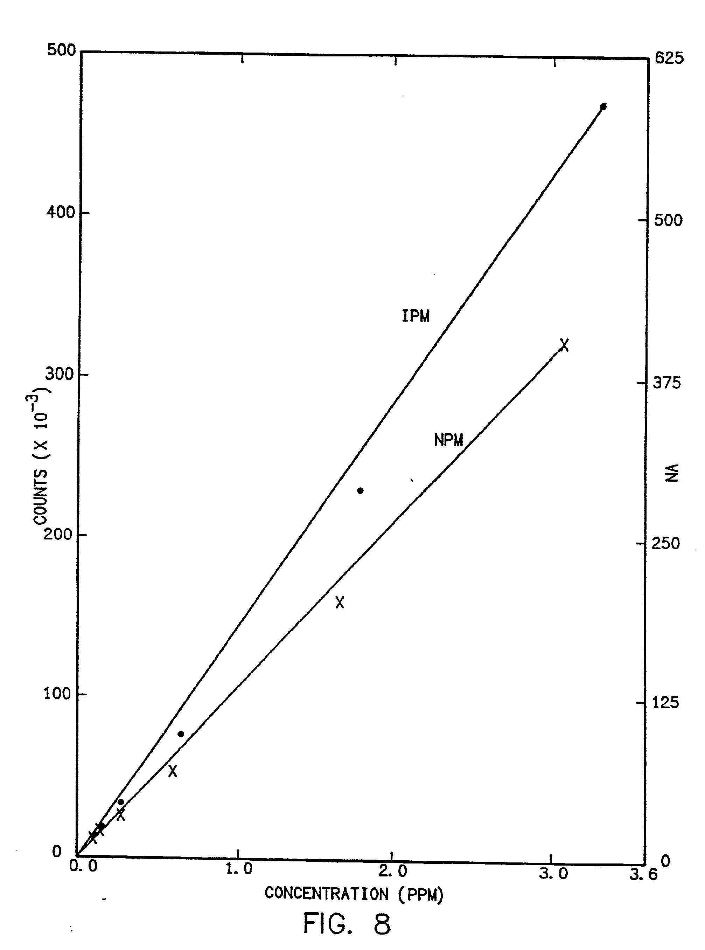

Referring now to fig. 8, current response from the potentiostat 108 may be correlated directly to odorant concentration level using calibration curves for each odorant. Fig. 8 shows such curves for IPM and NPM. Preferably, the processor 200 includes calibration programming to provide a direct odorant concentration output.

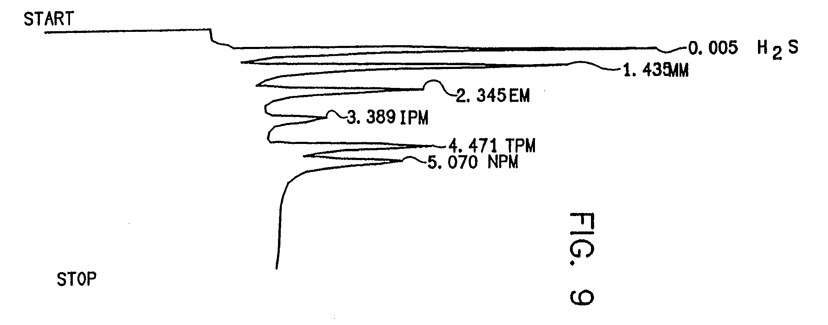

Referring now to fig. 9, it has been found that reversing the electrode bias to -300 mv, results in a concentration profile which selectively excludes organic sulfides from the detector output. Thus, the detector 104 can be selectively biased to exclude various classes of odorants such as organic sulfide. Fig. 9 illustrates a con-

7

centration profile at a bias of -300 mv of a mixture of $H_2S$, mercaptans and organic sulfides. The chromatogram shows clear peaks for $H_2S$ and the mercaptans, but shows no response to the two organic sulfides in the mixture (dimethyl sulfide and methyl ethyl sulfide). Tables I and II illustrate detector relative response factors (na/ppm)/(na/ppm for TBM) at various cell bias values. It will be observed that at a bias of less than about -750 mv, $H_2S$, but not mercaptans or organic sulfides, provoke significant detector response. At biases between about -300 mv and -0 mv, $H_2S$ and mercaptans, but not organic sulfides illicit detector response. At biases more positive than about +300 mv, significant organic sulfide readings may be obtained.

TABLE I

| Cmpd | Cell Bias | | | | |
|------|------|------|------|------|------|
| | -750 | -300 | 0 | +300 | +550 |
| $H_2S$ | 70 | 9.4 | 5.4 | 4.9 | 4.4 |
| IPM | ND | 1.2 | 2.7 | 1.9 | 1.6 |
| TBM | 1.0 | 1.0 | 1.0 | 1.0 | 1.0 |
| MES | ND | .08 | 0.05 | 0.28 | 0.60 |

TABLE II

| Cmpd | Cell Bias | | | |
|------|------|------|------|------|
| | +300 | +400 | +500 | +550 |
| $H_2S$ | 4.0 | 4.2 | 3.3 | 2.8 |
| EM | .91 | 1.0 | .88 | .74 |
| DMS | 1.3 | 1.8 | 2.7 | 2.9 |
| IPM | 1.4 | 1.2 | 1.1 | 1.2 |
| TBM | 1.0 | 1.0 | 1.0 | 1.0 |
| NPM | .62 | .95 | .89 | .80 |
| MES | .64 | 1.0 | 1.4 | 1.3 |
| THT | .49 | .84 | .91 | .93 |

Thus, by selectively adjusting the bias provided by the potentiostat 108, different sulfur compound classes may be selectively detected or eliminated from the chromatogram. Alternatively, a series of independent detectors could be employed with each being selectively biased to detect selected sulfur classes. In such a configuration, it could be possible to eliminate the gas chromatographic column 102. Alternatively, a single electrochemical cell could be provided with multiple electrodes, each biased separately. This configuration would permit the simultaneous measurement of total $H_2S$, total mercaptans, and total organic sulfides -- all the major odorants -- with a single cell simultaneously.

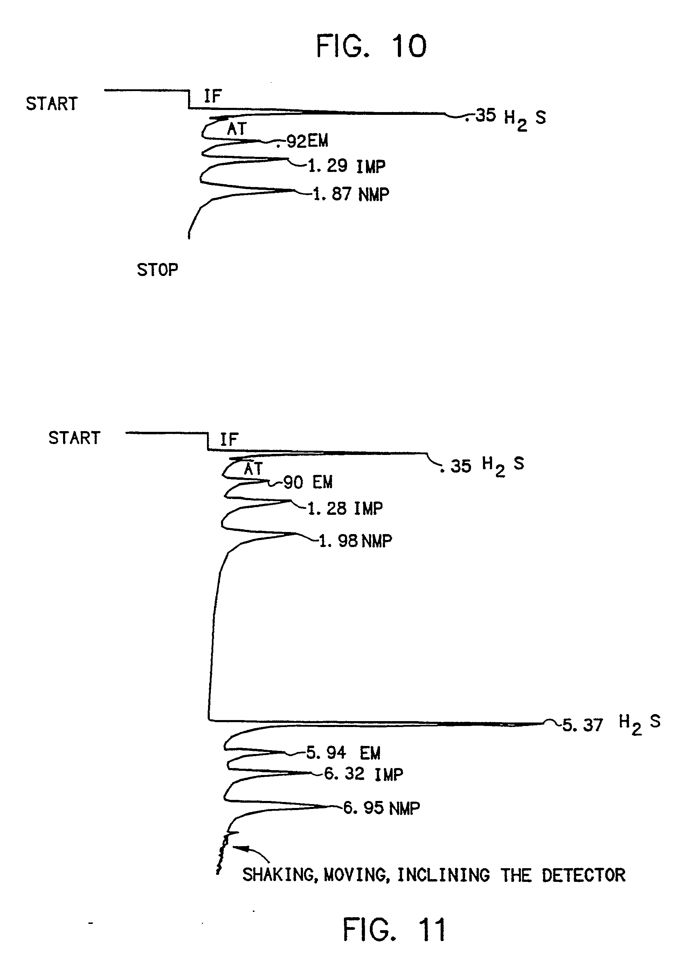

Referring now to figs. 10 and 11, it will be seen that the analyzer provides quick response time. These chromatograms show response to $H_2S$, EM, IPM and NPM injected at time = 0 minutes and time = 5 minutes (in fig. 11). Peak retention times are noted at the apex peal for each odorant. Peak widths are determined from the full width at one-half the maximum apex height. In separte experiments, peak widths as low as 0.028 minutes were obtained for methyl ethyl sulfide under optimum chromatographic conditions. Fig. 11 further illustrates detector response to shaking, moving and inclining the detector. As indicated, such movement has little effect on the chromatogram output.

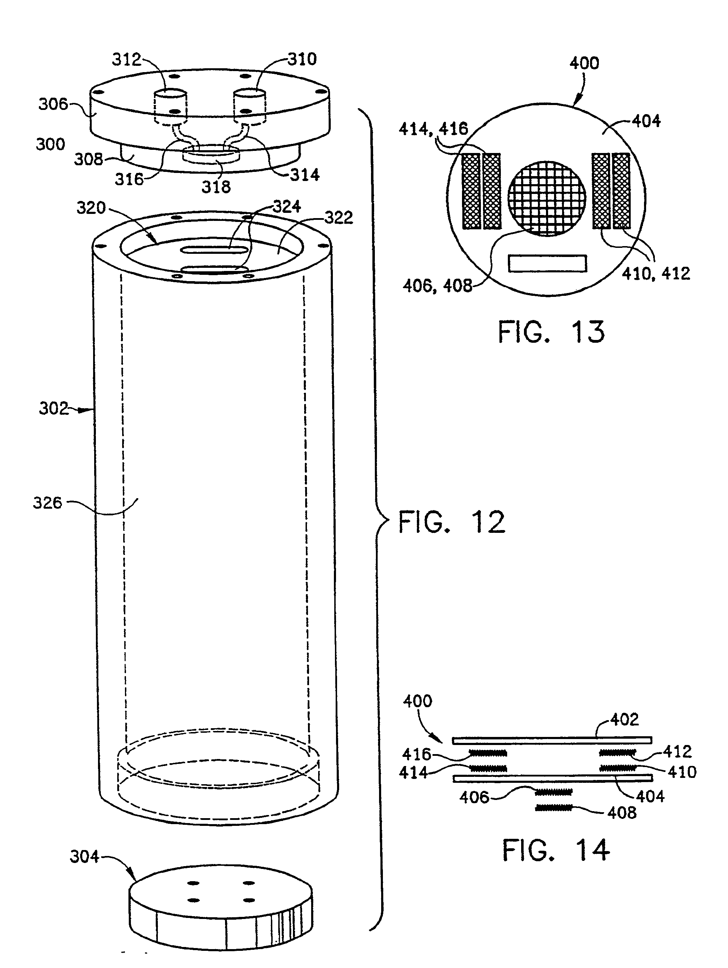

Referring to fig. 12, an alternative detector embodiment is shown as including a cylindrical exposure cap 300, a cylindrical housing 302 and a cylindrical end cap 304. The housing 302 and end cap 304 are conveniently formed from polypropylene while the exposure cap 300 is conveniently formed from TEFLON (trademark). The exposure cap 300 has an upper cylindrical portion 306 of enlarged diameter (about 1.5" dia.) and a reduced diameter lower cylindrical portion 308 (about 1.1" dia.). Section 306 is about 1/4" while section 308 is about 1/8" high. Disposed in the top surface of the upper cylindrical portion 306 are a gas inlet 310 and a gas outlet 312, connected, respectively, by gas ports 314 and 316 to a gas exposure chamber 318 formed on the lower surface of the lower reduced diameter section 308 of the exposure cap 300. The gas inlet 310 and gas outlet 312 may be formed from a pair of 1/4 - 28 threaded ports. The exposure chamber 318 may be formed from a 1/4" diameter X 1/16" deep port. The inlet and outlet ports 314 and 316 may be about 1/8" diameter.

The housing 302 is generally cylindrical, having an outside diameter of about 1.5" and an inside diameter of about 1.1", and includes an upper recess 320 formed by an upper electrode support wall 322. The support wall 322 is positioned at a depth of at least 1/8" to allow insertion of the lower cylindrical section 308 of the exposure cap 300 into the recess 320, such that the shoulder formed by the transition between the upper section 306 and the lower section 308 rests on top of the housing 302. The electrode support wall 322 includes a pair of slots 324 extending through the support wall 322 into a fluid reservoir 326 within the housing 302. The slots are approximately 5/16" long and 3/32" wide to permit insertion of a polyester wick (not shown) therethrough. The polyester wick is approximately 6" long and 1/4" wide. Both ends are inserted through the slots 329 and extend approximately 2 3/4" below the support wall 322 into the fluid reservoir 326.

To complete the detector, a 1" OD, 5/8" ID, double-sided tape ring (not shown) is placed over the polyester wick. The NAFION TM electrode assembly is then placed over the tape and 1/32" X 1/8" notches are cut in the upper wall of the housing 302 to accommodate the cell leads. A 1" OD, 3/8" ID silicon rubber gasket (not shown) is then taped to the bottom of section 308 of the exposure cap 300, centered on the exposure chamber 318, and the cap 300 is placed into the housing 302. Conventional connectors may be used to affix the cap 300 to the housing 302. The fluid reservoir 326 may then be filled with distilled water and the end cap 304 attached by conventional means to the bottom of the housing 302 to seal the fluid reservoir 326.

Referring now to figs, 13 and 14, an electrode assembly 400 includes a pair of upper and lower 1" diameter NAFION TM disks 402 and 404. A working electrode is formed on the lower surface of the disk 404 from a 3/8 inch gold powder electrode disk 406 overlayed with a 3/8" gold or platinum mesh current collector disk 408. The gold powder preferably has a surface area of about 0.51 square meters per grin. A counter electrode is formed on the upper surface of the disk 404 from a pair of platinum or platinum black electrode strips 410 overlayed by a pair of platinum mesh current collector strips 412. Similarly a reference electrode is formed on the upper surface of the disk 404 from a pair of platinum or platinum black electrode strips 414 overlayed by a pair of platinum mesh current collector strips 416. The counter and reference electrodes may also be generally semicircular in order to increase electrode area. These electrodes may advantageously formed by dividing a platinum or platinum black disk into 2/3 size and 1/3 size portions, the larger portion forming the counter electrode and the smaller portion forming the reference electrode.

To form the electrode, the 1" NAFION TM disks are, first boiled in 1:3 $H_2O:H_2SO_4$. Electrode leads of 2 cm 10 mil Platinum wire are spot-welded to the working, counter and reference electrode mesh current collectors. The counter and reference electrodes are placed on the upper NAFION TM disk with ZYTEX TM backings and tack soldered thereto. The electrodes are then covered with a TEFLON TM sheet and pressed for 15 seconds at 250 psi and 300° F. When cool the Zytex backing may be peeled off and the platinum mesh current collector strips affixed thereto. The lower NAFION TM disk is then pressed over the counter and reference electrodes and pressed against the upper NAFION TM disk for 15 seconds at 250 psi and 300° F. After cooling the working

9

electrode 406 with a ZYTEX TM backing is tacked soldered to the bottom of the lower NAFION TM disk 404 and pressed thereto for 15 seconds at 250 psi and 300° F. The ZYTEX TM should then be peeled off. The gold or platinum mesh current collector 408 is then placed over the gold electrode 406. A third NAFION TM disk with the 1/4″ diameter hole in the center (not shown) may then be placed over the working electrode. The third NAFION TM disk is covered with Zytex, tacked in place to hold the layers together, and the entire assembly placed in a press and pressed for 1 minute 15 seconds at 300 psi and 300°F. Optionally, the third NAFLON TM disk need not be used.

The primary functional mode of the odorant analyzer provides the utility technician with a simplified format for obtaining an on-site analysis of the natural gas odorant levels. Secondly, sub-level entry capability is available (via a special password) for the more knowledgeable laboratory user who requires greater flexibility in the operation of the unit. For the utility technician, the instrument will preferably be a "black-box" which directs the technician through the analysis cycle via prompts on the display 204.

Upon startup the display will read "Warming-up" for approximately 15 minutes while the thermal regulator module and detector reach their setpoints, which is preferably about 45°C. During this time the operator cannot access the keypad 14. Following the "warmup" cycle, the system goes into a ready mode where the operator can choose between a calibration or sample mode. Typically the operator will select the calibrate cycle and be prompted to connect up a calibration source and initiate the cycle by pressing the operate button. Following the calibration cycle, typically five minutes, the unit will turn to the ready mode where the operator is presented with the same two options. Calibration of the analyzer tales two forms. Approximately every three months, it is preferable that a full odorant calibration be performed. The full calibration will encompass all odorants that are expected to be present in a user's natural gas supply. The results are used to calculate the responses of each odorant relative to a primary target odorant, typically DMS. These relative responses are then entered into the processor program where they are permanently stored.

The second form of calibration is field calibration, which is performed by the utility technician using a single primary target odorant such as DMS. Based upon the instrument's field response to DMS, the relative responses for the other odorants may be factored accordingly. The DMS field standards may be supplied in special, teflon-coated lightweight, aluminum cylinders. These disposable cylinders will preferably have stable concentrations for at least six months.

Assuming a successful calibration, the operator will select the "sample" mode, connect the input line to the natural gas source and press the "operate" button. At the conclusion of the analysis cycle, the results may be printed and the instrument returned to the "ready" mode.

The laboratory user who has a working knowledge of gas chromatograph systems is able to gain access to the operating software to change the operational and/or calibration parameters. Parameters which typically are altered include:

1. Setting a time that the sample is allowed to flush through the sample loop.
2. Accessing to "Lookup" tables to select which odorants are to be included in an analysis.
3. Entering the concentration and type of odorant standard to be used by the field technician.
4. Entering the relative response factors for the odorants from the results of a full calibration.

Thus, a compact portable natural gas odorant analyzer has been described. The analyzer responds selectively to the presence of sulfur compounds in natural gas and does not respond to other concomitant compounds such as hydrocarbons. The device is capable of detecting odorant compounds at levels as low as approximately 0.1 ppm. When used with a gas chromatographic system with a 0.3 ml. injection volume, approximately 30pg of odorant compound can be detected with a signal to noise ratio of approximately 10. This detectability is better than the typical laboratory flame photometric detector by a factor of approximately 10-50. The device exhibits quick response time and is fast enough to permit rapid resolution of sequentially eluting chromatographic peals. The detector- responds sufficiently rapidly to resolve approximately 7 odorants in 5 minutes. Moreover, the device is insensitive to motion and orientation.

Although various embodiments have been disclosed, it should be apparent that any modifications and variations of the above-described invention are possible in light of these teachings. Therefore, it is to be understood that within the scope of this disclosed invention, it may be practiced other than as specifically described and the invention is not to be limited except in the spirit of the appended claims.

## Claims

1. An odorant analyzer system for measuring the concentration of odorants in natural gas comprising:
    natural gas odorant gas chromatograph column means for temperally separating components;
    electrochemical detector means for oxidizing said odorant compounds; and

potentiostat means for controlling an electrical potential across said detector means and providing an electrical output signal proportional to the concentration of gas components.

2. The analyzer system of claim 1 wherein said detector means includes a polymeric electrolyte, a polymeric wick in fluid communication with said polymeric electrolyte and a fluid source in fluid communication with said polymeric wick.

3. The analyzer system of claim 1 wherein said detector means include a polymeric electrolyte membrane, a working electrode attached to side of said polymeric electrolyte membrane, a counter electrode and a reference electrode attached to the opposite side of said polymeric electrolyte membrane, a polymeric wick in fluid communication with said polymeric electrolyte membrane and a fluid source in fluid communication with said polymeric wick, said electrodes being in electrical communication with said potentiostat means.

4. The analyzer system of claim 3 wherein said working electrode has a gold surface, said counter and reference electrodes are platinum and said polymeric electrolyte membrane is a perflourocarbon membrane.

5. The analyzer system of claim 4 wherein said potentiostat maintains a relatively constant bias across said working and reference electrodes of approximately +300mv.

6. The analyzer of claim 1 wherein said detector includes a lower fluid-containing cell body, an upper exposure cap having a gas flow inlet and outlet formed therein and an exposure chamber disposed between said upper exposure cap and said lower fluid-containing cell body, and having disposed therein oxidation/reduction means.

7. The analyzer system of claim 1 wherein said detector includes a lower fluid-containing cell body, an upper exposure cap having a gas flow inlet and outlet formed therein and an exposure chamber having disposed therein oxidation and reduction means, said exposure chamber being defined by said upper exposure cap, said lower fluid containing cell body and a continuous elastomeric membrane having a central cavity therein, said membrane forming a fluid-containing seal between said upper exposure cap and said lower fluid-containing cell body.

8. The analyzer system of claim 1 wherein said detector includes a lower fluid-containing cell body, an upper exposure cap and an exposure chamber having defined therein oxidation and reduction means, said lower fluid-containing cell body having a wall portion for containing a fluid, an upper chamber-defining surface and an exterior lip extending from said wall portion above said upper chamber-defining surface, said upper exposure cap including a lower chamber defining surface having an interior well formed therein, and interior gas feed and removal passages extending through said upper exposure cap to said lower interior well, said detector further including an elastomeric membrane disposed between said lower chamber-defining surface of said upper exposure cap and the top of said exterior lip of said lower fluid containing cell body, said exposure chamber being defined by said upper chamber-defining surface of said lower fluid-containing cell body, said lower chamber-defining surface of said upper exposure cap and said interior well formed in said lower chamber-defining surface of said upper exposure cap.

9. The analyzer system of claim 8 wherein said lower fluid-containing cell body has a passage formed in said upper chamber-defining surface and said detector means further include a polymeric wick having a portion thereof disposed on said upper chamber-defining surface and a portion extending through said passage into fluid contained in said fluid-container cell .

10. The analyzer of claim 9 wherein said oxidation/reduction means include a polymeric electrolyte formed from a perflourocarbon membrane, a gold working electrode formed on one side of said polymeric membrane and platinum counter and reference electrodes attached to the opposite side of said polymeric membrane, said potentiostat means for maintaining a bias across said working and reference electrodes of approximately +300 mv.

11. The analyzer system of claim 1 further including carrier gas flow means for providing a continuous flow of a carrier gas through said column means and said gas detecting means; and sample gas injection means for introducing a natural gas sample having odorant components to be measured into said carrier gas flow means.

12. The analyzer system of claim 11 wherein said carrier gas flow means provide a continuous flow of air at a pressure of about 16 psi.

13. The analyzer system of claim 1 further including carrier gas flow means for providing a continuous flow of a carrier gas through said column means and said gas detecting means, and a sample gas injecting means for introducing a natural gas sample having odorant components to be measured into said carrier gas flow means, said carrier gas flow means including a pump having an air inlet from atmosphere, and an air outlet, and further including a scrubber for treating air from said pump outlet, and said sample gas injecting means including a pump having a sample gas inlet and an outlet to atmosphere.

14. The analyzer system of claim 1 further including carrier gas flow means for providing a continuous flow of a carrier gas through said column means, and sample gas injection means for introducing a natural gas sample having odorant components to be measured into said carrier gas flow means, said carrier gas flow means including a pump having an air inlet from atmosphere and an air outlet, a scrubber unit having an inlet in fluid communication with said pump outlet and an outlet, a first gas flow valve having an inlet in fluid communication with said scrubber outlet, an outlet in fluid communication with said column means, and means for interrupting the flow of carrier gas between said valve inlet and outlet, said sample gas injection means including a sample inlet for receiving a natural gas sample, a second gas flow valve having a first inlet in fluid communication with said sample inlet, a second inlet in fluid communication with said first gas flow valve inlet, an outlet and means for selectively interrupting flow between one of said first and second valve inlets and said valve outlet, a gas sample loop having an inlet in fluid communication with said second gas flow valve and an outlet, a third gas flow valve having a valve inlet in fluid communication with said sample loop outlet, a first valve outlet in fluid communication with said first gas flow valve outlet, a second valve outlet and means for selectively interrupting flow between said inlet and said first and second valve outlets, and a sample pump having an inlet in fluid communication with said third gas flow valve second outlet and an outlet to atmosphere.

15. The gas analyzer system of claim 11 further including control means for selectively controlling said carrier gas flow means and said sample gas injection means to initially direct a carrier gas through said carrier gas flow means and said sample injection means, to thereafter redirect a carrier gas through said carrier gas flow means while directing a sample gas through said sample gas injection means, and to thereafter redirect a carrier gas through said carrier gas flow means and said sample gas injection means to direct a gas sample to said column means and said detector means.

16. The gas analyzer system of claim 14 further including control means to selectively set said gas flow control valves in a standby position to direct a carrier gas from said carrier gas pump through said scrubber, through said second gas flow control valve, through said sample loop, through said third gas flow control valve and to said column means and detector means, to thereafter selectively set said gas flow control valves in a sample loading position to direct a carrier gas from said carrier gas pump through said scrubber through said first gas flow control valve to said column means and detector means, and to activate said sample pump to draw a natural gas sample through said sample gas injection means, and to thereafter selectively set said gas flow control valves in said standby position to cause a carrier gas to direct a natural gas sample to said column means and detector means, and to deactivate said sample pump.

17. The gas analyzer system of claim 1 further including signal processing means for evaluating an electrical output from said potentiostat means and a printer module, a display and a serial data output electrically connected to said processing means.

18. In a natural gas odorant analyzer, the improvement in combination therewith comprising a housing having disposed therein:
    a gas chromatographic column for spatially separating natural gas odorants;
    an electrochemical detector for oxidating/reducing natural gas odorants;
    a potentiostat for controlling an electrical potential across said detector and providing an electrical output signal proportional to the concentrations of natural gas odorants;
    a gas delivery system including a carrier gas pump, a scrubber in fluid communication with said carrier gas pump, a sample loop in fluid communication with said scrubber and with said gas chromatograph column, a bypass loop in fluid communication with said scrubber and said gas chromatograph column, a natural gas sample inlet in fluid communication with said sample loop and a sample pump in fluid communication with said sample loop; and

a controller for selectively directing a carrier gas through bypass loop and said sample loop and directing a natural gas sample through said sample loop when a carrier gas is being directed through said bypass loop.

19. The natural gas odorant analyzer of claim 18 further including within said housing a signal processor for processing an output form said potentiostat, a printer for printing the results of an odorant analyzer, a display and a serial data output.

20. A method for analyzing natural gas odorants comprising the steps of introducing a natural gas sample into a sample loop, directing a carrier gas into said sample loop and carrying a natural gas sample to a gas chromatograph column to spatially separate gas components of the natural gas sample, sequentially providing the natural gas components from said gas chromatograph column to an electrochemical detector to oxidize the natural gas components, measuring the change in current in said electrochemical detector as natural gas components are provided thereto using a potentiostat, and displaying the output of said potentiostat versus time to show the concentration of natural gas components in a natural gas sample.

21. The method of claim 20 further including the step of biasing said electrochemical detector to selectively oxidize/reduce sulfur components and mercaptans but not hydrocarbons.

22. The method of claim 20 further including the step of simultaneously biasing a plurality of electrochemical electrodes or sequentially biasing a single electrochemical cell to selectively determine concentrations of odorant classes hydrogen sulfide, mercaptans and organic sulfides.

H2S — 0.21 PPM
DMS = 1.10 PPM
TBM = 0.03 PPM

ENTER 1 TO SAMPLE
ENTER 2 TO CALIBRATE

20 — LOW BATTERY
21 — RECHARGING
23 — STANDBY
24 — READY
25 — MEASURING

26

OPERATION

ON/OFF

19
DATA OUTPUT

30

CHARGES

SAMPLE INPUT
MAX PRESS
5 PSI

CARRIER GAS PRESSURE

28        32        12

10

18

16

14

FIG. 1

FIG. 2

TEMPERATURE REGULATED MODULE

SAMPLE
LOOP
114

112    116    100

SAMPLE
INLET
30    S1    S2    124

P

122    110
CHARCOAL
SCRUBBER    S3    SAMPLE
PUMP
P1

108    104    102
POTENTIOSTAT
PCB    DETECTOR    COLUMN

VENT
106

120    200    202
P    SIGNAL
PROCESSING    PRINTER
MODULE

CARRIER
PUMP
P2    204    206
LCD DISPLAY    RS 232 OUTPUT

H2S

H2S

H2S

TBM

TBM

TBM

MM    MM    MM
DMS    DMS    DMS

ANALOG OUTPUT

FIG. 3    TIME

SAMPLE
IN

SAMPLE
OUT

FIG. 4

FIG. 5

FIG. 6A

IPM
2.60

NPM
3.77

IPM
7.60

NPM
8.76

START

STOP

FIG. 6B

TBM
3.29

MES
3.85

START

STOP

START ——————————————— ·66 H₂S      1 ST
          1.09 MM                    INJECTION
          1.73 EM
          2.46 IPM

                              10.66 H₂S     2 ND
          11.10 MM                     INJECTION
          11.72 EM
          12.45 IPM

          17.57 THT

                              20.65         3 RD
          21.88                        INJECTION
          21.72
          22.45

          27.58

                              30.65         4 TH
          31.08                        INJECTION
          31.72
          32.45

          37.59

     CS
                              42.50 } IPM/NPM STANDARD
STOP                          43.64 }

FIG. 7

FIG. 8

START

0.005 H$_2$S

1.435MM

2.345EM

3.389 IPM

4.471 TPM

5.070 NPM

STOP

FIG. 9

EP 0 445 927 A2

# FIG. 10

START _____⌐ IF _____.35 H$_2$ S

  ⌐AT
   .92 EM
     1.29 IMP
       1.87 NMP

STOP

START _____⌐ IF _____.35 H$_2$ S

   ⌐AT
    90 EM
     1.28 IMP
       1.98 NMP

_____5.37 H$_2$ S

     5.94 EM
      6.32 IMP
        6.95 NMP

SHAKING, MOVING, INCLINING THE DETECTOR

# FIG. 11

FIG. 12

FIG. 13

FIG. 14